# EUROPEAN PATENT APPLICATION

(11) **EP 2 020 556 A1**
(43) Date of publication of application: **04.02.2009**
(21) Application number: 07425503.5
(22) Date of filing: 02.08.2007
(51) Int. Cl.: F16M 11/00, G06F 1/16, H04M 1/04, H04N 5/64

(54) **Supporting base for electronic device**

(71) Applicant: Urmet Telecomunicazioni S.p.A., 10154 Torino (IT)
(72) Inventor: Mondardini, Massimo, 10154 Torino (IT)
(74) Representative: Robba, Pierpaolo

(57) **Abstract**

A supporting base for an electronic device, in particular a cordless telephone set, comprising a body (11) and a seat (15) for said device, characterised in that said seat (15) is associated with a sliding drawer (13) that is movable between an idle configuration, in which the seat (15) is located within the body (11) of the supporting base, and an operating configuration, in which the seat (15) is located outside the body (11) of said base.

## Description

The present invention relates to a supporting base for an electronic device.

More particularly, the invention relates to a supporting base for an electronic device such as a telephone set, e.g. a cordless telephone set, or a remote control, such as a remote control for audio and/or video apparatuses and television sets.

Supporting bases for telephone sets are known having a seat with which the telephone set can be associated when it is not being used.

More particularly, supporting bases for cordless telephone handsets are known, which bases generally incorporate the function of transceiver base for the cordless telephone system and in which the seat for the telephone set is equipped with contacts for recharging the accumulators of the cordless set.

In the field of cordless sets, and in other fields too, supporting bases having additional functions, in particular, a function of flat screen display for displaying information of various kinds, are becoming at present widespread.

One of the drawbacks of the prior art supporting bases, in particular of last-generation bases associated with a display or other additional functions, is their encumbrance.

Encumbrance of the known supporting bases is due, at least in part, to the size and shape of the seat for the telephone set, which seat, however, is only occasionally used, e.g. for recharging the cordless set or for accommodating it when it is not being used.

It is an object of the present invention to solve the above problem of how to reduce the encumbrance of the supporting bases for electronic devices, in particular for cordless telephone sets.

It is another object of the present invention to provide a solution, easy and cheap to manufacture, to the above technical problem.

The above and other objects are achieved by the supporting base for an electronic device as claimed in the appended claims.

Advantageously, according to the invention, the supporting base can contain the equipment of a base station of a cordless telephone system and has a reduced encumbrance, especially when the drawer is in idle condition.

Advantageously, according to the invention, a supporting base for a telephone set can be provided, which base includes a flat screen display and has a regular and appealing shape and a reduced thickness.

Hereinafter, a preferred embodiment of the invention is disclosed, which is given only by way of non limiting example with reference to the accompanying drawings, in which:
- Fig. 1 is a front view of the base with the drawer in idle condition;
- Fig. 2 is a front view of the base with the drawer in operating condition.

Referring to the accompanying drawings, the supporting base for an electronic device, in particular for a cordless telephone set, includes a body 11 that, in the illustrated embodiment, has a substantially rectangular shape and reduced thickness, preferably a thickness of some centimetres and more preferably < 5.0 cm, and a drawer 13. The latter is slidable relative to body 11 and a seat 15 is defined therein for receiving an electronic device, for instance a cordless telephone set, not shown.

Drawer 13 is equipped with a sliding mechanism including a rod 17 guided along a channel 19 formed within body 11. Said rod 17 includes a rack 21 which engages the toothed ring of a damper 23, of the type known e.g. from US 2003/0196501.

The leading end or head of rod 17 is equipped with an anchor 25 engaging a resilient hook 27, located on the bottom of channel 19.

A helical spring 29 is provided between the leading end of rod 17, to which the spring is secured by means of a cylindrical projection 31, and a screw 33 secured in body 11.

A window 35 is provided on one side of body 11 to allow seat 15 to enter body 11 thanks to the sliding of drawer 13.

The operation of sliding drawer 13 is as follows.

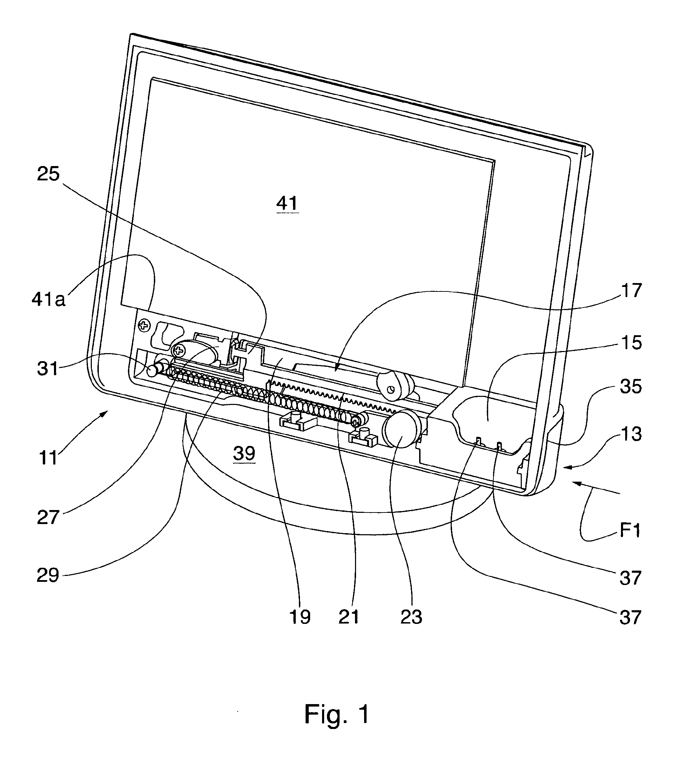

Starting from the idle condition shown in Fig. 1, where anchor 25 is engaged in resilient hook 27 and spring 29 is extended, a slight pressure in the direction of arrow F1 against the external wall of drawer 13, applied for instance by a finger of a hand, causes anchor 25 to disengage from resilient hook 27 and consequently drawer 13 to automatically come out from body 11, due to the return force of spring 29.

Advantageously, the provision of damper 23 cooperating with rack 21 compensates the resilient force of spring 29, thereby causing drawer 13 to come out from body 11 gradually instead of abruptly.

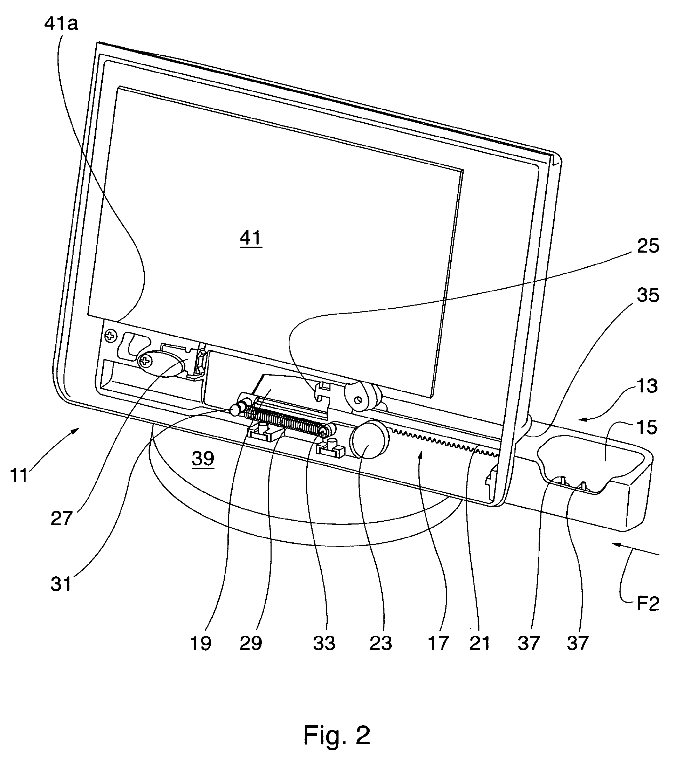

Similarly, starting from the operating condition shown in Fig. 2, a slight pressure in the direction of arrow F2, applied in continuous manner for compensating the return force of spring 29 and the resistance of damper 23, cause drawer 13 to retract into body 11, as far as anchor 25 engages resilient hook 27.

Advantageously, according to the invention, seat 15 associated with drawer 13 can be equipped with contacts 37 for recharging the accumulators of the cordless set or the device received in seat 15.

Still in accordance with the invention, body 11 can preferably comprise a pedestal 33 and a flat-screen display 41.

Advantageously, according to the invention, the guiding mechanism for the drawer and the drawer itself do not interfere with the other parts of the supporting base, e.g. with the equipment provided in case of a base station for a cordless telephone system, so that the base have reduced encumbrance especially when the drawer is retracted in body 11 of the supporting base.

More particularly, in the illustrated example, the sliding mechanism for drawer 13 could advantageously be arranged parallel to one side of the display, preferably horizontal bottom side 41a, below display 41, between pedestal 39 and said display 41.

In this way, a particularly compact configuration of the supporting base has been achieved, while leaving the upper portion free for the electronic devices generally provided for the operation of the display and/or the other functions envisaged e.g. in a base station for a cordless telephone system.

The supporting base illustrated here is only an exemplary embodiment, and other embodiments can be envisaged without departing from the principles of the invention.

## Claims

1. A supporting base for an electronic device, comprising a body (11) and a seat (15) for said device, **characterised in that** said seat (15) is associated with a sliding drawer (13) that is movable between an idle configuration, in which the seat (15) is located within the body (11) of the supporting base, and an operating configuration, in which the seat (15) i s located outside the body (11) of said base.

2. The supporting base as claimed in claim 1, wherein said drawer (13) is equipped with a sliding mechanism including a rod (17) guided along a channel (19) formed within said body (11).

3. The supporting base as claimed in claim 1, wherein said rod (17) includes a rack (21) cooperating with a damper (23) to make the sliding movement of said drawer gradual.

4. The supporting base as claimed in claim 3, wherein the leading end or head of the rod (17) is equipped with an anchor (25) engaging a resilient hook (27), located on the bottom of the channel (19), when said drawer (13) is brought to the idle configuration.

5. The supporting base as claimed in claim 4, wherein said sliding mechanism further includes a helical spring (29) located between the leading end of the rod (17) and a fastening member (33) provided in the body (11).

6. The supporting base as claimed in claim 5, wherein said body (11) has a window (35) allowing the seat to enter the body thanks to the sliding movement of said drawer (13).

7. The supporting base as claimed in claim 6, wherein said seat (15) is equipped with contacts (37) for recharging the accumulators of a cordless telephone set.

8. The supporting base as claimed in any preceding claim, wherein said body has a substantially rectangular shape and reduced thickness.

9. The supporting base as claimed in any preceding claim, wherein said body incorporates a flat screen display (41).

10. The supporting base as claimed in any preceding claim, wherein said supporting base is the base of a cordless telephone system.

## Amended claims

### Amended claims in accordance with Rule 137(2) EPC.

**1.** A supporting base station for a cordless telephone system, comprising a body (11) and a seat (15) for a cordless telephone set, wherein said body (11) comprises a pedestal (33) and a flat-screen display (41) and wherein said seat (15) is associated with a sliding drawer (13) equipped with a sliding mechanism, said seat being movable between an idle configuration, in which the seat (15) is located within the body (11) of the supporting base, and an operating configuration, in which the seat (15) is located outside the body (11) of said base, characterize in that said sliding mechanism for the drawer (13) is arranged parallel to the horizontal bottom side (41a) of the display, below said flat screen display (41), between said pedestal (39) and said display (41).

**2.** The supporting base as claimed in claim 1, wherein said drawer (13) is equipped with a sliding mechanism including a rod (17) guided along a channel (19) formed within said body (11).

**3.** The supporting base as claimed in claim 1, wherein said rod (17) includes a rack (21) cooperating with a damper (23) to make the sliding movement of said drawer gradual.

**4.** The supporting base as claimed in claim 3, wherein the leading end or head of the rod (17) is equipped with an anchor (25) engaging a resilient hook (27), located on the bottom of the channel (19), when said drawer (13) is brought to the idle configuration.

**5.** The supporting base as claimed in claim 4, wherein said sliding mechanism further includes a helical spring (29) located between the leading end of the rod (17) and a fastening member (33) provided in the body (11).

**6.** The supporting base as claimed in claim 5, wherein said body (11) has a window (35) allowing the seat to enter the body thanks to the sliding movement of said drawer (13).

**7.** The supporting base as claimed in claim 6, wherein said seat (15) is equipped with contacts (37) for recharging the accumulators of a cordless telephone set.

**8.** The supporting base as claimed in any preceding claim, wherein said body has a substantially rectangular shape and reduced thickness.
